(19) Europäisches Patentamt
European Patent Office
Office européen des brevets

(11) **EP 0 842 230 B1**

(12) **FASCICULE DE BREVET EUROPEEN**

(45) Date de publication et mention
de la délivrance du brevet:
**28.03.2001 Bulletin 2001/13**

(51) Int Cl.⁷: **C09C 3/06**, C09C 1/36,
C09C 1/04

(21) Numéro de dépôt: **97925112.1**

(22) Date de dépôt: **21.05.1997**

(86) Numéro de dépôt international:
**PCT/FR97/00889**

(87) Numéro de publication internationale:
**WO 97/44398 (27.11.1997 Gazette 1997/51)**

(54) **PIGMENTS BLANCS STABILISES CONTRE LE RAYONNEMENT UV PAR UN AGENT OXYDANT**

WEISSPIGMENTE DIE MIT EINEM OXYDATIONSMITTEL GEGEN UV-STRAHLUNG
STABILISIERT SIND

WHITE PIGMENTS STABILISED AGAINST UV RADIATION BY AN OXIDISING AGENT

(84) Etats contractants désignés:
**BE CH DE ES FR GB IT LI NL SE**

(30) Priorité: **21.05.1996 FR 9606289**

(43) Date de publication de la demande:
**20.05.1998 Bulletin 1998/21**

(73) Titulaire: **CENTRE NATIONAL D'ETUDES
SPATIALES
75001 Paris (FR)**

(72) Inventeurs:
• **GUILLAUMON, Jean-Claude
F-31450 Ayguesvives (FR)**
• **NABARRA, Véronique, Pascale
F-31450 Baziege (FR)**

(74) Mandataire: **Colas, Jean-Pierre et al
Cabinet de Boisse et Colas
37, avenue Franklin D. Roosevelt
75008 Paris (FR)**

(56) Documents cités:
**EP-A- 0 090 241          US-A- 4 172 744**

• **DATABASE WPI Week 8311 Derwent
Publications Ltd., London, GB; AN 83-26602K
XP002025088 & JP 58 021 456 A (KUBO Y.) , 8
Février 1983**
• **DATABASE WPI Week 8438 Derwent
Publications Ltd., London, GB; AN 84-235926
XP002025089 & SU 1 068 450 A (LENEV L.M.) , 23
Janvier 1984**
• **PATENT ABSTRACTS OF JAPAN vol. 10, no. 7
(P-419), 11 Janvier 1986 & JP 60 162263 A
(RICOH), 24 Août 1985,**

Printed by Jouve, 75001 PARIS (FR)

EP 0 842 230 B1

**Description**

L'invention concerne des pigments blancs revêtus d'un agent oxydant, un procédé pour leur préparation, et les peintures les contenant.

Le contrôle thermique de véhicules spatiaux fait appel à diverses techniques, notamment le contrôle thermique passif.

Le contrôle thermique passif est basé sur les propriétés thermo-optiques des revêtements appliqués sur les véhicules spatiaux, c'est-à-dire :

- l'absorptivité solaire ($\alpha_s$) qui est le rapport :

$$\alpha_s = \frac{\text{flux radiatif solaire absorbé}}{\text{flux radiatif solaire incident}}$$

Ce coefficient d'absorption solaire est intégré dans le spectre solaire entre 0,2 et 2,8 µm.

- l'émissivité $\varepsilon$ qui est un coefficient de rayonnement de l'énergie dépendant de la nature des revêtements.

Tous les corps émettent, en effet, un rayonnement proportionnel à la quatrième puissance de leur température absolue, à leur surface, au temps et à l'émissivité $\varepsilon$.

On a ainsi la relation :

$$W = \varepsilon \, S \, \sigma \, T^4$$

où

W : énergie échangée par rayonnement entre le corps considéré et son environnement,
S : surface (en cm$^2$)
T : Température du corps (en K)
$\sigma_o$ : constante de Stephan Boltzman = 5,67.10$^{-8}$W/m$^2$.K$^4$

d'où l'on tire :

$$\varepsilon = \frac{W}{S \, \sigma_o \, T^4}$$

Les revêtements de contrôle thermique passif peuvent se classer en diverses catégories parmi lesquelles on distingue en particulier, en fonction du rapport $\alpha_s/\varepsilon$ :

- les revêtements froids ($\alpha_s/\varepsilon<1$) (par exemple : peintures blanches, films plastiques métallisés, miroirs en quartz, etc...)
- les revêtements chauds ($\alpha_s/\varepsilon>1$) (par exemple peintures noires, dorure, métaux polis, etc...).

Les peintures blanches sont constituées d'un liant, d'au moins un pigment et d'un solvant.

Les pigments blancs les plus utilisés sont : le dioxyde de titane ($TiO_2$), l'oxyde de zinc ($ZnO$), l'oxyde d'étain ($SnO_2$), l'orthotitanate de zinc ($Zn_2\,TiO_4$), l'orthostannate de zinc ($Zn_2\,SnO_4$), l'orthotitanate d'étain ($Sn\,TiO_4$), etc... ainsi que les mélanges de ces pigments.

Lorsque les peintures blanches sont exposées à l'environnement spatial, elles subissent une dégradation, notamment des propriétés thermo-optiques (augmentation du coefficient d'absorption solaire : $\alpha_s$), sous l'action combinée des différents facteurs de cet environnement spatial, essentiellement par l'effet du rayonnement ultra-violet solaire.

Ce rayonnement solaire se répartit entre 180 et 2800 nm et le rayonnement ultra-violet court (180 à 250 nm) est responsable de la quasi-totalité des dégradations.

Une hypothèse que l'on peut avancer pour expliquer ces dégradations est la suivante :

Sous l'action du rayonnement UV, les pigments blancs, essentiellement des oxydes métalliques $MO_x$, vont perdre de l'oxygène pour donner un produit $MO_{x-y}$ dont les propriétés thermo-optiques ($\alpha_s$) sont dégradées.

L'accroissement du coefficient d'absorption solaire $\alpha_s$ est dommageable au contrôle thermique passif et peut être la source d'échauffements pouvant avoir de graves conséquences sur les composants du véhicule spatial et/ou sur le matériel embarqué.

Il existe donc un besoin pour des pigments blancs dont la dégradation, notamment sous l'effet du rayonnement UV solaire, serait réduite, voire supprimée.

La présente invention vise à satisfaire ce besoin.

Plus particulièrement l'invention concerne des pigments blancs minéraux sous forme de fines particules ayant une stabilité accrue vis-à-vis du rayonnement ultraviolet solaire, caractérisés en ce que les particules des pigments sont revêtues d'un agent oxydant.

Selon l'invention, on a trouvé, en effet, que les agents oxydants ont la propriété de combler le déficit en oxygène des pigments ($MO_{x-y}$), au fur et à mesure que le rayonnement UV produit des dégradations. Il s'ensuit une protection presque totale de ces pigments.

De préférence, un pigment selon l'invention contient 1 à 10% en poids d'agent oxydant. En dessous de 1% l'amélioration de stabilité est faible tandis qu'au-dessus de 10% le gain de stabilité obtenu ne s'accroît plus guère.

L'invention concerne aussi un procédé d'amélioration de la stabilité de pigments blancs minéraux vis-à-vis du rayonnement ultraviolet solaire, caractérisé en ce qu'il consiste à revêtir des particules d'un pigment blanc minéral d'une solution aqueuse d'un agent oxydant, puis à sécher lesdites particules de pigment de manière à obtenir des particules de pigment revêtues d'agent oxydant.

Une méthode de revêtement peut, par exemple, consister à dissoudre un agent oxydant dans de l'eau en une concentration appropriée, par exemple pouvant varier entre 2% et 30% en poids, selon l'agent oxydant. Si besoin est, on peut chauffer le mélange pour une meilleure dissolution. Dans la solution résultante, on ajoute le pigment blanc à traiter et l'on agite pendant quelques heures pour rompre les agglomérats de particules éventuellement présents. On laisse décanter le pigment, puis on le sépare de la solution. On sèche ensuite le pigment , par exemple, en étuve. Un broyage final peut être opéré pour rompre les agglomérats de particules éventuellement formés au cours du séchage.

D'autres techniques de revêtement des particules par l'agent oxydant sont bien évidemment possibles, ainsi que cela sera évident pour l'homme de l'art.

On pourrait par exemple utiliser une technique de pulvérisation.

Le pigment blanc revêtu de l'invention est utile pour la fabrication de peintures blanches, en particulier de type spatial.

Comme agents oxydants solubles dans l'eau que l'on peut utiliser dans l'invention, on peut citer notamment :

- les perborates de potassium, sodium, ammonium, cadmium, calcium, ou lithium ;
- les métaborates de potassium, sodium, ammonium, calcium, ou lithium ;
- les tétraborates de potassium, sodium, ammonium, calcium, ou lithium ;
- les chlorates d'aluminium, ammonium, baryum, calcium, césium, lithium, potassium, sodium, ou strontium ;
- les perchlorates d'aluminium, ammonium, baryum, calcium, césium, lithium, potassium, sodium, ou strontium ;
- les peroxydisulfates d'ammonium, baryum, potassium, ou sodium ;
- les peroxydes de potassium ou sodium.

A l'heure actuelle, on préfère utiliser le perborate de potassium ou le perborate de sodium. Ceux-ci peuvent être appliqués sous forme de solutions aqueuses à une concentration comprise entre 5 et 10%, car au-delà de cette concentration, les agglomérats de particules de pigment qui se forment souvent lors du séchage deviennent très durs et posent alors des problèmes de broyage. En dessous de 5% la quantité d'oxydant n'est pas suffisante pour protéger le pigment.

L'invention concerne, en outre, une peinture blanche comprenant au moins un pigment, au moins un liant filmogène et au moins un solvant, caractérisée en ce que le pigment est un pigment conforme à l'invention et/ou traité par le procédé de l'invention. Les peintures blanches de l'invention peuvent s'appliquer en une ou plusieurs couches sur le substrat à peindre en donnant des feuils de peinture d'une épaisseur avantageusement comprise entre 50 et 200 μm.

On peut utiliser n'importe quel liant utile pour la formation des peintures. On peut citer, à titre d'exemples non limitatifs, des silicones, du silicate de potassium ou de sodium, des polyuréthannes, des résines époxydes, des résines acryliques, des résines glycérophtaliques, etc...

L'homme de l'art pourra trouver dans l'abondante littérature publiée à ce sujet de nombreux types de liants utilisables. Pour des applications spatiales, on préfère utiliser, comme liants, des résines silicones ou du silicate de potassium ou de sodium.

Le rapport en poids de pigment traité/liant sera habituellement dans la gamme de 2 à 12, bien que ces valeurs ne soient pas étroitement critiques.

Comme solvant, on peut utiliser, à titre indicatif, des hydrocarbures aromatiques (toluène, xylène, styrène, naphta, etc...), des cétones (méthyléthylcétone, méthylisobutylcétone, diacétone alcool, etc...), des esters (acétate d'éthyle, acétate de butyle, acétate de propyle), acétate d'éthylèneglycol, acétate de butylèneglycol, etc...), des éthers de glycol (éthylglycol, butylglycol, méthylène glycol, propylène glycol, etc...), des alcools (éthanol, propanol, butanol, etc...) et de l'eau. La proportion de solvant sera habituellement comprise dans la gamme de 0 à 60% en poids par rapport au poids total de la peinture.

L'application des couches de peintures contenant les pigments traités de l'invention sur un substrat peut s'effectuer au pistolet à peinture, à la brosse ou par toute autre technique connue.

Les peintures de l'invention peuvent être appliquées sur toutes sortes de substrats tels que des métaux, des films polymériques ou des matériaux composites. Si désiré, ou nécessaire, on peut appliquer une couche primaire d'accrochage ou toute autre couche primaire avant d'appliquer les peintures de l'invention.

Outre son utilisation sur véhicules ou engins spatiaux, les peintures de l'invention sont utiles dans les industries aéronautiques automobiles ou du bâtiment.

Les exemples non limitatifs suivants sont donnés en vue d'illustrer l'invention.

Dans les exemples conformes à l'invention, le pigment utilisé a été préparé par le mode opératoire suivant :

Dans 400 ml de la solution aqueuse d'agent oxydant indiquée dans les exemples, on a ajouté 200 g du pigment blanc à traiter et on a agité le tout pendant 4 heures. On a laissé décanté le pigment, puis on l'a séparé de la solution sur un büchner. On a séché ensuite le pigment dans une étuve à 110°C pendant 16 heures. Un rebroyage final a été effectué, si nécessaire, en cas de présence d'agglomérats de particules de pigments.

## EXEMPLE 1 (comparatif)

Dans cet exemple et les exemples suivants, la méthode de test des peintures de l'invention est la suivante : ce test accéléré est destiné à apprécier la tenue à l'environnement spatial, notamment au rayonnement UV solaire, de revêtements de contrôle thermique de véhicules spatiaux. Les échantillons de revêtements à tester sont positionnés sur un porte-échantillon maintenu à 40°C pendant toute la durée de l'essai et situé dans une enceinte à vide dont le niveau se situe autour de $5 \times 10^{-7}$ Torr.

Les irradiations ultra-violettes sont effectuées à partir d'une source Xénon à arc court de 4000 Watts suivie d'un double filtrage interférentiel délivrant deux bandes ultraviolettes. Les conditions d'irradiation sont les suivantes :

- bande 200 à 300 nm : environ 1000 équivalents d'heures solaires (ehs) réalisées à un facteur d'accélération voisin de 2,5 soit une puissance incidente de l'ordre de : $2,5 \times 1,62 = 4,05$ Mw/cm$^2$.
- bande 300 à 400 nm : environ 1000 équivalents d'heures solaires réalisées à un facteur d'accélération voisin de 2,5 soit une puissance incidente de l'ordre de : $2,5 \times 10,2 = 25,5$ Mw/cm$^2$.

Les irradiations sont menées en continu dans les intervalles de temps séparant les points de mesure effectués à 0, 200 et 1000 ehs.

Les mesures optiques réalisées in situ consistent à mesurer la réflectance spectrale (dans la plage 250 à 2400 nm) relativement à un échantillon de référence constitué par une couche mince d'aluminium évaporé sur substrat de verre. Le système de mesure utilisé comprend un spectrophotomètre PERKIN ELMER $\lambda$ 9 associé à une sphère intégrante à échantillon latéral pouvant être placée sous vide.

Ces mesures relatives sont complétées par des mesures absolues réalisées en début et en fin d'essai, à l'air, à l'aide d'un spectromètre CARY 2300 associé à une sphère intégrante à échantillon central. La correspondance effectuée en début d'essai pour chaque échantillon entre le spectre relatif in situ à l'air et le spectre absolu donne les coefficients correctifs à chaque longueur d'onde qui sont appliqués à tous les spectres relatifs in situ ultérieurs.

A chaque spectre de réflexion est associée la valeur de la réflectance solaire calculée à partir des valeurs spectrales prises dans l'intervalle de 250 à 2400 nanomètres.

La valeur de la réflectance solaire ($\rho_s$) permet d'atteindre le coefficient d'absorption solaire ($\alpha_s$) par la relation : $\alpha_s = 1 - \rho_s$ pour un échantillon de revêtement opaque au rayonnement solaire.

Les variations de réflectance solaire ou du coefficient d'absorption solaire, en cours d'irradiation, permettent de suivre la dégradation des revêtements sous l'action du rayonnement ultraviolet.

La peinture de l'exemple 1 contient le pigment orthotitanate de zinc non traité.

Cet exemple servira de référence et de point de comparaison par rapport à des peintures élaborées à partir de pigments selon l'invention.

On obtient un revêtement blanc dont l'épaisseur après séchage est proche de 100 micromètres, en appliquant sur un substrat une peinture préparée par le mode opératoire suivant : à 11,50 g du liant silicone RTV 121 de RHONE POULENC, on ajoute 21 g de toluène, on agite manuellement, on ajoute ensuite 69 g d'orthotitanate de zinc non traité ($Zn_2 TiO_4$) à la solution obtenue en agitant.

Après cela, on broie le mélange dans un flacon en verre de 250 ml avec 100 g de billes de verre dans un broyeur RED DEVIL pendant 30 minutes.

On sépare la composition obtenue des billes par tamisage.

On incorpore 0,25 g de catalyseur 10028 (RHONE POULENC) et 18 g d'un diluant préparé à partir de 47 parties en poids de diacétate d'éthylèneglycol et de 6 parties en poids d'éther monoéthylique d'éthylèneglycol, juste avant application de la peinture.

Le rapport pigment/liant (P/L) est de 6.

Après irradiations ultraviolettes de 1000 ehs, le facteur d'absorption solaire ($\alpha_s$) s'est dégradé de $\Delta\alpha_s$ = 0,08.

## EXEMPLE 2

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25g)
- pigment : orthotitanate de zinc ayant été traité dans une solution à 5% de perborate de sodium (69g)
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha_s$ = 0,037.

## EXEMPLE 3

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25g)
- pigment : orthotitanate de zinc ayant été traité dans une solution à 8% de perborate de sodium (69g)
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha_s$ = 0,030.

## EXEMPLE 4

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25g)
- pigment : orthotitanate de zinc ayant été traité dans une solution à 9% de perborate de sodium (69g)
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha_s$ = 0,020.

## EXEMPLE 5

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25g)
- pigment : orthotitanate de zinc ayant été traité dans une solution à 10% de perborate de sodium (69g)
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha_s$ = 0,007.

## EXEMPLE 6

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25g)
- pigment : orthotitanate de zinc ayant été traité dans une solution à 5% de tétraborate de sodium (69g)
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha_s$ = 0,05.

## EXEMPLE 7

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25g)
- pigment : orthotitanate de zinc ayant été traité dans une solution à 10% de tétraborate de sodium (69g)
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha_s$ = 0,04.

## EXEMPLE 8

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25g)
- pigment : orthotitanate de zinc ayant été traité dans une solution à 20% de perchlorate de sodium (69g)
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha_s$ = 0,05.

## EXEMPLE 9

On obtient un revêtement blanc dont l'épaisseur après séchage est proche de 100 micromètres, en appliquant sur un substrat une peinture dont la composition est la suivante :

- liant silicone RHODORSIL 10336 (20 g) de RHONE POULENC
- pigment : orthostannate de zinc ayant été traité dans une solution à 5% de perborate de sodium (75g)
- solvants : mélange de toluène, d'ester et d'éther de l'exemple 1.

Le rapport P/L est de 7,5.

Après irradiations ultraviolettes de 1000 ehs, le facteur d'absorption solaire ($\alpha_s$) s'est dégradé de $\Delta\alpha_s$ = 0,02, alors que cette dégradation est de $\Delta\alpha_s$ = 0,035 pour un pigment orthostannate de zinc non traité.

## Revendications

1. Pigments blancs minéraux sous forme de fines particules ayant une stabilité accrue vis-à-vis du rayonnement ultraviolet solaire, caractérisés en ce que les particules des pigments sont revêtues d'un agent oxydant.

2. Pigments selon la revendication 1, caractérisés en ce que l'agent oxydant est choisi parmi :

   - les perborates de potassium, sodium, ammonium, cadmium, calcium, ou lithium ;
   - les métaborates de potassium, sodium, ammonium, calcium, ou lithium ;
   - les tétraborates de potassium, sodium, ammonium, calcium, ou lithium ;
   - les chlorates d'aluminium, ammonium, baryum, calcium, césium, lithium, potassium, sodium, ou strontium ;
   - les perchlorates d'aluminium, ammonium, baryum, calcium, césium, lithium, potassium, sodium, ou strontium ;
   - les peroxydisulfates d'ammonium, baryum, potassium, ou sodium ;
   - les peroxydes de potassium ou sodium.

3. Pigments selon la revendication 2, caractérisés en ce que l'agent oxydant est du perborate de sodium ou du perborate de potassium.

4. Pigments selon l'une quelconque des revendications 1 à 3, caractérisés en ce qu'ils contiennent de 1 à 10% en poids d'agent oxydant.

5. Pigments selon l'une quelconque des revendications 1 à 4, caractérisés en ce que ledit pigment est un oxyde métallique.

6. Pigments selon l'une quelconque des revendications 1 à 5, caractérisés en ce que ledit pigment est choisi dans le groupe constitué de l'oxyde de zinc (ZnO), de l'oxyde d'étain ($SnO_2$), de l'orthotitanate de zinc ($Zn_2TiO_4$), de l'hortostannate de zinc ($Zn_2SnO_4$), de l'orthotitanate d'étain ($SnTiO_4$) et de leurs mélanges.

7. Procédé d'amélioration de la stabilité de pigments blancs minéraux vis-à-vis du rayonnement ultraviolet solaire, caractérisé en ce qu'il consiste à revêtir des particules d'un pigment blanc minéral d'une solution aqueuse d'un agent oxydant, puis à sécher lesdites particules de pigment de manière à obtenir des particules de pigment revêtues d'agent oxydant.

8. Procédé selon la revendication 7, caractérisé en ce que l'agent oxydant est choisi parmi :

   - les perborates de potassium, sodium, ammonium, cadmium, calcium, ou lithium ;
   - les métaborates de potassium, sodium, ammonium, calcium, ou lithium ;
   - les tétraborates de potassium, sodium, ammonium, calcium, ou lithium ;
   - les chlorates d'aluminium, ammonium, baryum, calcium, césium, lithium, potassium, sodium, ou strontium ;
   - les perchlorates d'aluminium, ammonium, baryum, calcium, césium, lithium, potassium, sodium, ou strontium ;
   - les peroxydisulfates d'ammonium, baryum, potassium, ou sodium ;
   - les peroxydes de potassium ou sodium.

9. Procédé selon la revendication 7, caractérisé en ce que la solution aqueuse contient 2 à 30% en poids d'agent oxydant.

10. Procédé selon la revendication 8, caractérisé en ce que l'agent oxydant est du perborate de sodium ou du perborate de potassium.

11. Procédé selon la revendication 10, caractérisé en ce que la solution aqueuse contient 5 à 10% en poids d'agent oxydant.

12. Peinture blanche comprenant au moins un pigment, au moins un liant filmogène et au moins un solvant, caractérisée en ce que le pigment est un pigment tel que défini à l'une quelconque des revendications 1 à 6 et/ou traité par un procédé tel que défini à l'une quelconque des revendications 7 à 11.

13. Engin spatial revêtu au moins partiellement d'au moins une couche de peinture blanche, caractérisé en ce que ladite peinture blanche est telle que définie à la revendication 12.

## Claims

1. White mineral pigments in the form of fine particles having increased stability towards ultra-violet solar radiation characterised in that the pigment particles are coated with an oxidising agent.

2. White pigments according to claim 1 characterised in that the oxidising agent is selected from:

- potassium, sodium, ammonium, cadmium, calcium and lithium perborates;
- potassium, sodium, ammonium, calcium and lithium metaborates;
- potassium, sodium, ammonium, calcium and lithium tetraborates;
- aluminium, ammonium barium, calcium, cesium, lithium, potassium, sodium and strontium chlorates;
- aluminium, ammonium barium, calcium, cesium, lithium, potassium, sodium and strontium perchlorates;
- ammonium, barium, potassium and sodium peroxydisulfates;
- potassium and sodium peroxides.

3. Pigments according to claim 2 characterised in that the oxidising agent is sodium perborate or potassium perborate.

4. Pigments according to any one of claims 1 to 3 characterised in that they contain 1% to 10% by weight of oxidising agent.

5. Pigments according to any one of claims 1 to 4 characterised in that said pigment is a metal oxide.

6. Pigments according to any one of claims 1 to 5 characterised in that said pigment is selected from the group formed by zinc oxide (ZnO), tin oxide ($SnO_2$), zinc orthotitanate ($Zn_2TiO_4$), zinc orthostannate ($Zn_2SnO_4$), tin orthotitanate ($SnTiO_4$) and mixtures thereof.

7. Process for improving the stability of white mineral pigments towards ultra-violet solar radiation characterised in that it consists of coating particles of a white mineral pigment with an aqueous solution of an oxidising agent and then drying said pigment particles so as to obtain pigment particles coated with oxidising agent.

8. Process according to claim 7 characterised in that the oxidising agent is selected from:

- potassium, sodium, ammonium, cadmium, calcium and lithium perborates;
- potassium, sodium, ammonium, calcium and lithium metaborates;
- potassium, sodium, ammonium, calcium and lithium tetraborates;
- aluminium, ammonium barium, calcium, cesium, lithium, potassium, sodium and strontium chlorates;
- aluminium, ammonium barium, calcium, cesium, lithium, potassium, sodium and strontium perchlorates;
- ammonium, barium, potassium and sodium peroxydisulfates;
- potassium and sodium peroxides.

9. Process according to claim 7 characterised in that the aqueous solution contains 2% to 30% by weight of oxidising agent.

10. Process according to claim 8 characterised in that the aqueous solution is sodium perborate or potassium perborate.

11. Process according to claim 10 characterised in that the aqueous solution contains 5% to 10% by weight of oxidising agent.

12. White paint comprising at least one pigment, at least one film-forming binder and at least one solvent characterised in that the pigment is a pigment as defined in any one of claims 1 to 6 and/or treated by a process as defined in any one of claims 7 to 11.

13. A spacecraft at least partially coated with at least one layer of white paint characterised in that said white paint is as defined in claim 12.

**Patentansprüche**

1. Mineralische Weißpigmente in Form von feinen Teilchen mit einer erhöhten Stabilität gegenüber der UV-Sonnenstrahlung, dadurch gekennzeichnet, dass die Pigmentteilchen mit einem Oxidationsmittel überzogen sind.

2. Pigmente nach Anspruch 1, dadurch gekennzeichnet, dass das Oxidationsmittel ausgewählt ist aus:

- den Kalium-, Natrium-, Ammonium-, Cadmium-, Calcium- oder Lithiumperboraten;
- den Kalium-, Natrium-, Ammonium-, Calcium- oder Lithiummetaboraten;
- den Kalium-, Natrium-, Ammonium-, Calcium- oder Lithiumtetraboraten;
- den Aluminium-, Ammonium-, Barium-, Calcium-, Cäsium-, Lithium-, Kalium-, Natrium- oder Strontiumchloraten;
- den Aluminium-, Ammonium-, Barium-, Calcium-, Cäsium-, Lithium-, Kalium-, Natrium- oder Strontiumperchloraten;
- den Ammonium-, Barium-, Kalium- oder Natriumperoxodisulfaten;
- den Kalium- oder Natriumperoxiden.

3. Pigmente nach Anspruch 2, dadurch gekennzeichnet, dass das Oxidationsmittel Natriumperborat oder Kaliumperborat ist.

4. Pigmente nach einem der Ansprüche 1 bis 3, dadurch gekennzeichnet, dass sie 1 bis 10 Gew.-% Oxidationsmittel enthalten.

5. Pigmente nach einem der Ansprüche 1 bis 4, dadurch gekennzeichnet, dass das Pigment ein Metalloxid ist.

6. Pigmente nach einem der Ansprüche 1 bis 5, dadurch gekennzeichnet, dass das Pigment aus der Gruppe ausgewählt ist, die aus Zinkoxid (ZnO), Zinnoxid ($SnO_2$), Zinkorthotitanat ($Zn_2TiO_4$), Zinkorthostannat ($Zn_2SnO_4$), Zinnorthotitanat ($SnTiO_4$) und ihren Mischungen besteht.

7. Verfahren zur Verbesserung der Stabilität von mineralischen Weißpigmenten gegenüber der UV-Sonnenstrahlung, dadurch gekennzeichnet, dass es darin besteht, dass Teilchen eines mineralischen Weißpigments mit einer wässrigen Lösung eines Oxidationsmittels überzogen werden und diese Pigmentteilchen dann getrocknet werden, so dass man mit Oxidationsmittel überzogene Pigmentteilchen erhält.

8. Verfahren nach Anspruch 7, dadurch gekennzeichnet, dass das Oxidationsmittel ausgewählt ist aus:

   - den Kalium-, Natrium-, Ammonium-, Cadmium-, Calcium- oder Lithiumperboraten;
   - den Kalium-, Natrium-, Ammonium-, Calcium- oder Lithiummetaboraten;
   - den Kalium-, Natrium-, Ammonium-, Calcium- oder Lithiumtetraboraten;
   - den Aluminium-, Ammonium-, Barium-, Calcium-, Cäsium-, Lithium-, Kalium-, Natrium- oder Strontiumchloraten;
   - den Aluminium-, Ammonium-, Barium-, Calcium-, Cäsium-, Lithium-, Kalium-, Natrium- oder Strontiumperchloraten;
   - den Ammonium-, Barium-, Kalium- oder Natriumperoxodisulfaten;
   - den Kalium- oder Natriumperoxiden.

9. Verfahren nach Anspruch 7, dadurch gekennzeichnet, dass die wässrige Lösung 2 bis 30 Gew.-% Oxidationsmittel enthält.

10. Verfahren nach Anspruch 8, dadurch gekennzeichnet, dass das Oxidationsmittel Natriumperborat oder Kaliumperborat ist.

11. Verfahren nach Anspruch 10, dadurch gekennzeichnet, dass die wässrige Lösung 5 bis 10 Gew.-% Oxidationsmittel enthält.

12. Weiße Anstrichfarbe, die mindestens ein Pigment, mindestens ein filmbildendes Bindemittel und mindestens ein Lösungsmittel enthält, dadurch gekennzeichnet, dass das Pigment ein Pigment nach einem der Ansprüche 1 bis 6 und/oder ein in einem Verfahren nach einem der Ansprüche 7 bis 11 behandeltes Pigment ist.

13. Raumfahrzeug, das mindestens teilweise mit mindestens einer Schicht von weißer Anstrichfarbe überzogen ist, dadurch gekennzeichnet, dass die weiße Anstrichfarbe von der in Anspruch 12 definierten Art ist.